Europäisches Patentamt

European Patent Office

Office européen des brevets

(19)

(11) Veröffentlichungsnummer : **0 058 242**
**B1**

(12) **EUROPÄISCHE PATENTSCHRIFT**

(45) Veröffentlichungstag der Patentschrift :
02.05.84

(21) Anmeldenummer : **81109279.0**

(22) Anmeldetag : **29.10.81**

(51) Int. Cl.³ : **H 05 K 7/18, G 12 B 9/08**

(54) **Datensichtgerät.**

(30) Priorität : **16.02.81 DE 3105601**

(43) Veröffentlichungstag der Anmeldung :
**25.08.82 Patentblatt 82/34**

(45) Bekanntmachung des Hinweises auf die Patenterteilung : **02.05.84 Patentblatt 84/18**

(84) Benannte Vertragsstaaten :
**AT CH DE FR GB IT LI NL SE**

(56) Entgegenhaltungen :
**EP-A- 0 030 659**
**DE-A- 2 847 135**
**DE-U- 7 919 933**
**US-A- 4 084 213**

(73) Patentinhaber : **SIEMENS AKTIENGESELLSCHAFT**
**Berlin und München Wittelsbacherplatz 2**
**D-8000 München 2 (DE)**

(72) Erfinder : **Münscher, Wolfgang**
**Grandlstrasse 34**
**D-8000 München 60 (DE)**.

Jouve, 18, rue St-Denis, 75001 Paris, France

Datensichtgerät

Die Erfindung betrifft ein Datensichtgerät gemäß dem Oberbegriff des Anspruchs 1. Ein solcher Datenmonitor wird in der DE-OS 18 11 272 beschrieben.

Bei dem vorbekannten Anzeigegerät ruht das Schirmteil — in geneigter Lage — auf einer von einem Sockel ausgehenden Säule, die in beiden Teilen jeweils an zentraler Stelle verankert ist. Eine solche Konstruktion ist relativ standfest und bietet zudem die Möglichkeit, das Schirmteil auf einfache Weise — etwa durch Einbau eines Kugelgelenks in den Säulenkopf — allseitig drehbar zu lagern. Mehr Aufwand würde es allerdings kosten, den Bildschirm auch noch höhenverstellbar auszuführen. Nachteilig ist ferner der Umstand, daß das Gerät eine recht sperrige Bauform hat, die den Transport und Versand erschwert und einen Betrieb in hängender Position praktisch nicht zuläßt. Dies ist vor allem deshalb besonders unbefriedigend, weil dadurch gerade der entscheidende Vorzug des in der DE-OS 18 11 272 behandelten Sichtgeräts, nämlich die geringe Bautiefe des Bildschirms, nicht richtig zu Geltung kommt.

Der Erfindung liegt die Aufgabe zugrunde, ein Datensichtgerät zu schaffen, das über ein verstellbares Schirmteil verfügt, ohne weiteres in eine kompakte Transport- und Wandstellung gebracht werden kann, dabei einfach und kippsicher aufgebaut ist.

Diese Aufgabe wird erfindungsgemäß durch einen Monitor mit den Merkmalen des Anspruchs 1 gelöst.

Vorteilhafte Ausgestaltungen und Weiterbildungen der Erfindung sind Gegenstand zusätzlicher Ansprüche.

Der Lösungsvorschlag soll nun anhand eines in der Zeichnung schematisch dargestellten Ausführungsbeispiels näher erläutert werden. In den Figuren der Zeichnung sind einander entsprechende Teile mit gleichen Bezugszeichen versehen. Es zeigen:

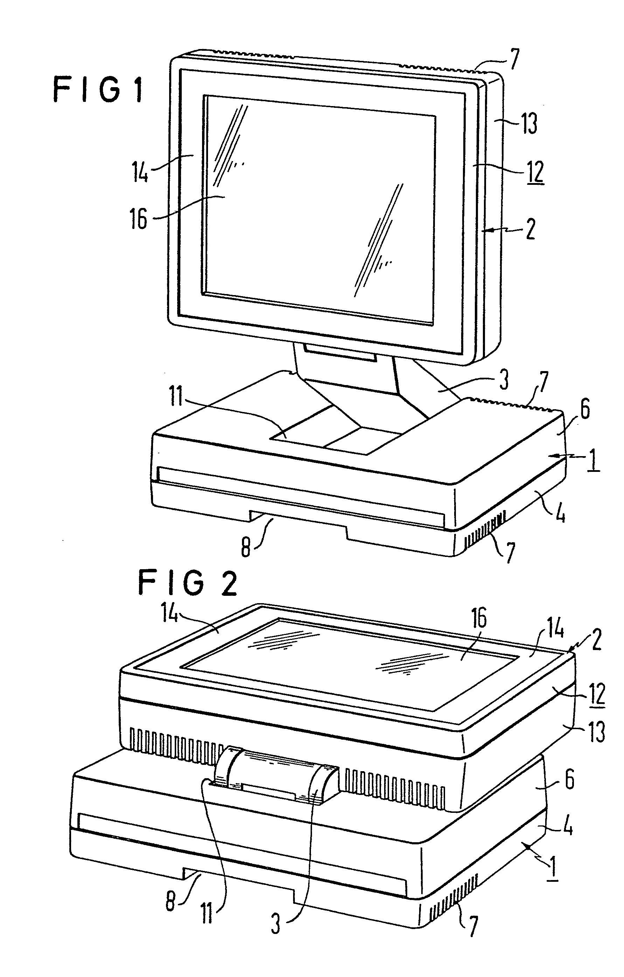

Figur 1 das Ausführungsbeispiel aus einer Blickrichtung von schräg vorn, mit stehendem Schirmteil;

Figur 2 das Gerät aus der gleichen Perspektive, mit liegendem Schirmteil;

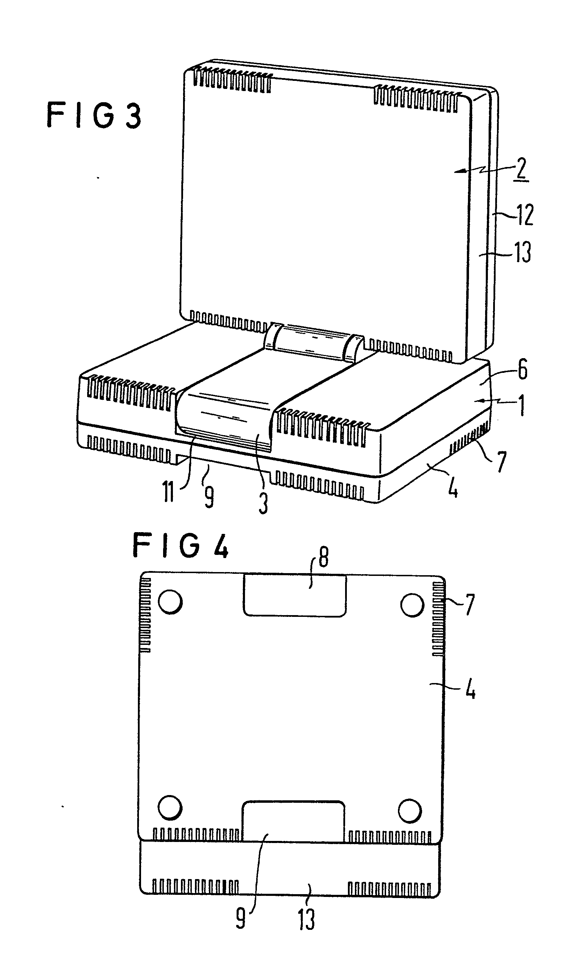

Figur 3 eine Geräteansicht von schräg hinten, mit geneigtem Schirmteil; und

Figur 4 das Gerät mit der in Fig. 3 dargestellten Schirmteilposition, von unten gesehen.

Der dargestellte Datenmonitor dient als Sichtgerät einer Datenverarbeitungsanlage. Er besteht im wesentlichen aus drei Teilen: einem plattenförmigen, flach aufliegenden Fußteil 1, einem plattenförmigen Schirmteil 2 mit ähnlichen Abmessungen und einem die beiden Platten miteinander verbindenden Schwenkarm 3.

Das Fußteil besteht aus zwei übereinanderliegenden Hälften, einem Bodenteil 4 und einem Deckteil 6. Beide Hälften sind in ihren Kantenbereichen mit Kühlschlitzen 7 versehen, aus denen die im Betrieb entstehende Wärme entweichen kann. Aus der Unterseite des Fußteils 1 sind zwei Vertiefungen 8, 9 herausgearbeitet. Diese Vertiefungen, die sich im Bereich der Vorderkante bzw. der Hinterkante befinden und von den Seiten des Fußteils her zugänglich sind, fungieren als Griffhilfe Kabelaustritt. Die Oberseite des Fußteils ist an einer Stelle ebenfalls vertieft. Diese Ausnehmung, die in den Figuren die Bezugsziffer 11 erhalten hat, geht von der Mitte der Rückkante aus und erstreckt sich parallel zu den Seitenkanten bis fast zur Vorderkante. Sie nimmt den Schwenkarm 3 auf, der im Bereich der Rückkante drehbar am Fußteil 1 befestigt ist und in beigeklappter Stellung mit der Oberseite des Fußteils 1 eine gemeinsame durchgehende Ebene bildet. Das andere Ende des Schwenkarms 3 ist drehbar mit dem Schirmteil 2 verbunden. Beide Drehachsen sind zueinander parallel; sie verlaufen waagrecht und quer zur Schwenkarmerstreckung. Auch das Schirmteil ist aus zwei mit Kühlschlitzen 7 versehenen Hälften, einem Vorderteil 12 und einem Rückteil 13, zusammengesetzt. Das Vorderteil bildet auf seiner Frontseite einen Rahmen 14, der ein Anzeigenfeld 16 einfaßt.

Das Schirmteil 2 läßt sich in verschiedenen Höhen plazieren und von einer leicht vorn- über geneigten Stellung nach hinten bis zu einer liegenden Position verkippen. Damit sind die wichtigsten ergonomischen Forderungen an den Betrachtungswinkelbereich des Displays erfüllt. Steht das Schirmteil 2 senkrecht und ist der Schwenkarm 3 versenkt, so schließt die Schirmteil-Frontseite mit der vorderen Schmalseite des Fußteils 1 bündig ab, so daß sich dem Betrachter eine praktisch durchgehende Fläche ohne optisch störende Sprünge und Lücken bietet. Befindet sich das Schirmteil 2 — bei versenktem Schwenkarm 3 — in einer waagerechten Position, so liegt es dem Fußteil 1 auf und fluchtet mit ihm links und rechts. In dieser Stellung läßt sich das Gerät bequem tragen, verpacken und verschicken und bei Bedarf auch an die Wand hängen.

Im vorliegenden Fall ist das Gerät so gestaltet, daß das Schirmteil 2 von Hand in die gewünschte Position gebracht wird und in dieser Lage ohne zusätzliche Arretierungen verharrt. In bestimmten Fällen ist ein Verstellmechanismus vorzuziehen, bei dem die Schwenkbewegungen elektrisch gesteuert werden können.

Normalerweise wird die für das Sichtgerät benötigte Elektronik folgendermaßen auf die einzelnen Geräteeinheiten aufgeteilt sein: Das Schirmteil enthält lediglich das eigentliche Flachdisplay einschl. der auf dem Display direkt fixierten Ansteuerbausteine, während im Fußteil die Netzteil- und Schnittstellen-Bauelemente untergebracht sind. Bei dieser Verteilung ist sichergestellt, daß das Fußteil ein ausreichendes Gegengewicht zum Schirmteil bildet. Man könnte den Schwenkarm auch so ausbilden, daß er selbst Platz für Bauelemente bis hin zum kompletten Netzteil bietet. Das Flachdisplay selbst sollte nach dem in der DE-OS 18 11 272 geschilderten Darstellungsprinzip arbeiten, bei dem ein in einem hinteren Raum brennendes Plasma Elektronen bereitstellt, die durch ausgewählte Löcher einer Steuerplatte nach vorn geschleust, dort nachbeschleunigt und schließlich auf einen Leuchtschirm gelenkt werden. Wird dabei die Gasentladung, wie in der DE-PS 24 12 969 vorgesehen, jeweils zwischen einer relativ großflächigen Kathode auf der Rückseite und einer der Steuerplattenzeilen erzeugt, so kann man mit dem Flachbildschirm auch größte Informationsmengen, etwa Farbfernsehbilder, in guter Qualität darstellen.

**Ansprüche**

1. Datensichtgerät mit

a) einem plattenförmigen, flach aufliegenden Fußteil mit rechteckiger Grundfläche,

b) einem ebenfalls plattenförmigen, oberhalb des Fußteils befindlichen Schirmteil, dessen vom Fußteil abgewandte Grundfläche im wesentlichen von einem Anzeigenfeld eingenommen wird, und mit einem

c) langgestreckten Stützelement, das an seinem einen Ende (Fußteilende) im Fußteil verankert ist und mit seinem anderen Ende (Schirmteilende) das Schirmteil hält,

dadurch gekennzeichnet, daß

d) das Stützelement ein Schwenkarm (3) ist, dessen Fußteilende drehbar im Bereich der oberen Rückkante des Fußteils (1) und dessen Schirmteilende drehbar im Bereich der unteren Rückkante des Schirmteils (2) gelagert ist, wobei beide Drehachsen parallel zur oberen Rückkante des Fußteils (1) verlaufen,

e) die Oberseite des Fußteils (1) eine parallel zu ihren Seitenkanten verlaufende Vertiefung (11) hat, in die der Schwenkarm (3) mit bündigem Abschluß versenkt werden kann,

f) das Gerät bei versenktem Schwenkarm (3) und senkrecht zum Fußteil (1) orientierten Schirmteil (2) eine durchgehende, plane Frontfläche bietet und

g) das Schirmteil (2) dann, wenn es nach hinten in eine parallele Lage zum Fußteil (1) gedreht wird und der Schwenkarm (3) versenkt ist, auf dem Fußteil (1) mit seitlich fluchtenden Schmalseiten zu liegen kommt.

2. Datensichtgerät nach Anspruch 1, dadurch gekennzeichnet, daß das Fußteil (1) und das Schirmteil (2) wenigstens angenähert gleiche Abmessungen haben.

3. Gerät nach Anspruch 1 oder 2, dadurch gekennzeichnet, daß die Unterseite des Fußteils (1) zwei Vertiefungen (8, 9) hat, die von gegenüberliegenden Schmalseiten des Fußteils (1), vorzugsweise von der vorderen und der hinteren Fußteil-Schmalseite, ausgehen.

4. Gerät nach einem der Ansprüche 1 bis 3, dadurch gekennzeichnet, daß das Fußteil (1) Netzteilbauelemente und vorzugsweise auch Schnittstellenbauelemente enthält.

**Claims**

1. Data display device comprising

a) a flat-standing plate-shaped stand component which has a rectangular base ;

b) a similarly plate-shaped screen component which is arranged above the stand component and whose surface facing away from the stand component, is essentially covered by a display field ; and

c) a longitudinally extending supporting element which is fixed in the stand component at its one end (stand component end) and holds the screen component at its other end (screen component end),

characterised in that

d) the supporting element is a swivel arm (3), the stand component end is rotatably mounted in the region of the upper rear edge of the stand component (1) and the screen component end of which is rotatably mounted in the region of the lower rear edge of the screen component (2), both axes of rotation running parallel to the upper rear edge of the stand component (1) ;

e) the upper face of the stand component (1) has a recess (11) which runs parallel to the lateral edges thereof and into which the swivel arm (3) can be lowered so as to form a flush closure ;

f) the device has a continuous, plane front surface when the swivel arm (3) is lowered and the screen component (2) is orientated at right angles to the stand component (1) ; and

g) when the screen component (2) is turned towards the back into a position in which it is parallel with the stand component (1) and the swivel arm (3) is lowered, the screen component (2) is arranged on the stand component (1) with the edge faces laterally aligned.

2. A data display device according to Claim 1, characterised in that the stand component (1) and the screen component (2) have at least approximately the same dimensions.

3. A device according to Claim 1 or Claim 2, characterised in that the underside of the stand component (1) has two recesses (8, 9) which start from opposite edge faces of the stand component (1), preferably from the front and the rear edge faces of the stand component.

4. A device according to one of Claims 1 to 3, characterised in that the stand component (1) comprises power supply components and preferably also intersection point components.

**Revendications**

1. Appareil de visualisation de données comportant

a) une partie servant de pied, en forme de plaque et reposant à plat, qui possède une surface de base rectangulaire,

b) une partie servant d'écran, également en forme de plaque et se trouvant au-dessus de la partie servant de pied, dont la surface de base opposée à la partie servant de pied est occupée essentiellement par une zone d'affichage, et comportant

c) un élément de support allongé qui est ancré dans la partie servant de pied au niveau d'une de ses extrémités (extrémité côté pied) et supporte la partie servant d'écran au niveau de son autre extrémité (extrémité côté écran), caractérisé par le fait que

d) l'élément de support est un bras pivotant (3) dont l'extrémité côté pied est montée de façon à pouvoir tourner dans la région du bord arrière supérieur de la partie servant de pied (1) et dont l'extrémité côté écran est montée de façon à pouvoir tourner dans la région du bord arrière inférieur de la partie servant d'écran (2), les deux axes de rotation s'étendant parallèlement au bord arrière supérieur de la partie servant de pied (1),

e) la face supérieure de la partie servant de pied (1) comporte un renfoncement (11) qui s'étend parallèlement à ses bords latéraux et dans lequel le bras pivotant (3) peut être escamoté avec fermeture de niveau,

f) l'appareil offre une surface frontale plane continue lorsque le bras pivotant (3) est escamoté et que la partie servant d'écran (2) est orientée perpendiculairement par rapport à la partie servant de pied (1), et

g) la partie servant d'écran (2) vient alors s'appuyer sur la partie servant de pied (1) avec les petits côtés de niveau latéralement, lorsqu'elle est tournée vers l'arrière dans une position parallèle à la partie servant de pied (1) et que le bras pivotant (3) est escamoté.

2. Appareil de visualisation suivant la revendication 1, caractérisé par le fait que la partie servant de pied (1) et la partie servant d'écran (2) possèdent au moins approximativement les mêmes dimensions.

3. Appareil suivant la revendication 1 ou 2, caractérisé par le fait que la face inférieure de la partie servant de pied (1) comporte deux renfoncements (8, 9) qui partent des petits côtés opposés de la partie servant de pied (1), de préférence des petits côtés avant et arrière de la partie servant de pied.

4. Appareil suivant l'une des revendications 1 à 3, caractérisé par le fait que la partie servant de pied (1) contient des composants du bloc d'alimentation et de préférence également des composants de l'interface.

FIG 1

FIG 2

FIG 3

FIG 4